Europäisches Patentamt

**European Patent Office**

Office européen des brevets

(19)

(11) Publication number: **0 206 226**
A2

(12) # EUROPEAN PATENT APPLICATION

(21) Application number: **86108258.4**

(51) Int. Cl.⁴: **G 02 B 6/44**

(22) Date of filing: **18.06.86**

(30) Priority: **26.06.85 IT 2130085**

(43) Date of publication of application: **30.12.86**
**Bulletin 86/52**

(84) Designated Contracting States: **CH DE FR GB LI LU NL SE**

(71) Applicant: **Società Cavi Pirelli S.p.A., Piazzale Cadorna 5, I-20123 Milan (IT)**

(72) Inventor: **Gazzana Priaroggia, Paolo, Piazza S. Ambrogio, 8, Milan (IT)**

(74) Representative: **Mariani, Giorgio, Dr. et al, INDUSTRIE PIRELLI S.p.A. Direzione Brevetti Piazzale Cadorna, 5, I-20123 Milano (IT)**

(54) **Submarine optical-fibres telecommunication line.**

(57) The submarine line for optical-fibres telecommunications, comprises two optical-fibres cables (1, 2), and an optoelectronic repeater (3), interposed between them.

The optoelectronic repeater (3) has its component parts encased in a watertight casing (4) that, in this turn, is enclosed in a metallic-box (13) – whose bases are provided with apertures, facing towards the cables.

The apertures of the metallic-box (13) are sealingly closed by cylindrical bodies (22) – by means of which there is realized both, the mechanical connection – between the box (13) and the armouring of each cable (1, 2) formed by a rope (34) embedded in it, as well as the connection – between the optical-fibres (37) and the conductors of the cables, and the extremities of the optical-fibres (5) and of the electrical-conductor (6) of the optoelectronic repeater (3).

ACTORUM AG

# SUBMARINE OPTICAL-FIBRES TELECOMMUNICATION LINE

## Description

The present invention refers to a submarine line - for optical-fibres telecommunications, which incorporates optoelectronic repeaters for the signals that are transmitted.

The lines in question comprise at least two optical-fibres cables that are disposed in series and an optoelectronic repeater, interposed between them, is connected to the facing extremities of the two cables.

In the known submarine lines, the problem exists of preventing even minimum traces of water from reaching and damaging the optoelectronic component parts of the repeater.

At present, the optoelectronic component parts of the repeater, are enclosed inside a watertight casing - from which there emerge the ends of the optical-fibres and the ends of the electrical conductors. To the casing walls, there are sealingly connected the sheaths of the two cables and the mechanically-resistent armourings of these latter. In the zone of the sealed-connection - between the cables' sheaths and repeater's casing, there are enclosed both, the connections between the cables' optical-fibres and the extremities of the repeater's optical-fibres, as well as the connections between the electrical conductors, that are incorporated inside the optical-fibres cables, and the ends of the electrical conductors of the repeaters.

This known solution does not guarantee absolutely, that the component parts of the optoelectronic repeater are protected against humidity - even when the sealed-connection, between the cables' sheaths and the watertight casing of the repeater, is effectuated perfectly.

In fact, as time passes, should even the minimum cracks be verified in the cables' sheaths, that could permit the entry of traces of water into the cable, said water could reach and damage the component parts of the repeater, by migrating along the cables and penetrating into the watertight casing through the ends of the optical-fibres and of the conductors emerging from it - whenever defects in the sealing may be verified in correspondence of these ends. Moreover, in the known submarine lines, the connection of the optoelectronic repeater to the extremities of the cables, is quite complex to carry-out, with also involving a relatively long time.

In fact, the connections must be effectuated between the optical-fibres of the cables and those of the repeaters, the electrical connections between the electrical-conductors incorporated in the cable and the electrical-conductors of the repeaters, the sealed-connection -˙ between the watertight casing that encloses the repeater's component parts, and the cables' sheaths, and finally, the mechanical-connection of the cables' armourings to the casing of the repeater.

All these operations are often carried out aboard the ship, from where the laying of the submarine line is carried out and not in the factory, where good use can be made of all those contrivances that prevent humidity from coming into contact with the component parts of the repeater.

The relatively high amount of time required - for connecting the line, and the conditions under which this operation is effectuated, increase the risks of damages - resulting from humidity, done to the component parts of the optoelectronic repeaters.

The aim of the present invention, is a submarine optical-fibres line for telecommunications - that is devoid of the above-indicated drawbacks.

More specifically, the aim of the present invention is a submarine, optical-fibres line for telecommunications, incorporating optoelectronic repeaters that - besides being easy and rapid to connect, also allows for having an optimal protection against any humidity reaching the component parts of the optoelectronic repeaters.

The object of the present invention is a submarine line for optical-fibres telecommunications, that comprises an optoelectronic repeater, for the signals transmitted, inserted in-between two submarine optical-fibres cables, each provided with a watertight sheath of the type wherein the mechanically-resistant armouring is a rope - that occupies the radially innermost position of the cable, said line being characterized by the fact that the optoelectronic repeater comprises a box that is substantially tubular, and cylindrical bodies made of polymeric material, and provided on their exterior with a metallic sheath, that sealingly shuts the apertures in the box bases, the said cylindrical bodies englobing tracts of optical-fibres for connecting with those of the cables and with those of the repeaters, and a first rope-length having one extremity fixed to the cable rope and the other extremity fixed to a mechanically-resistant element made solid with the box, this latter enclosing a watertight casing containing the component parts of the optoelectronic repeater, the metallic sheaths of said cylindrical bodies being moreover, connected in a watertight way, to the cable sheaths.

The present invention will be better understood from the following detailed description - made solely by way of non-limiting example, with reference to the figures in the attached drawing TABLES, wherein:

FIG. 1 - shows a cross-sectioned lateral view of a submarine line tract, according to the invention, in the zone where an optoelectronic repeater is present.

FIG. 2 - shows the transversal section, made along tract II-II of FIG. 1.

FIG. 3 - shows a large-scale view of a longitudinal section of a component part of the line.

FIG. 4 - shows the transversal cross-section of a cable in the line, made along the tract IV-IV of FIG. 1.

A submarine line for optical-fibres telecommunications according to the invention, comprises at least two submarine optical-fibres cables disposed in series to each other, with an optoelectronic repeater - for the signals transmitted, being interposed between them. The cables forming a line according to the invention, are of the type wherein the mechanically-resistent armouring is a compact antitorsional rope, disposed in the radially innermost zone of the cables, where the spaces between the component wires or threads are filled-up with a practically incompressible fluid.

In this text, by the term: 'incompressible fluid' are intended liquid substances, preferably viscous - even with a high viscosity; gases are excluded in this term.

Examples of incompressible fluids are: silicone grease, petroleum-jelly, and suchlike.

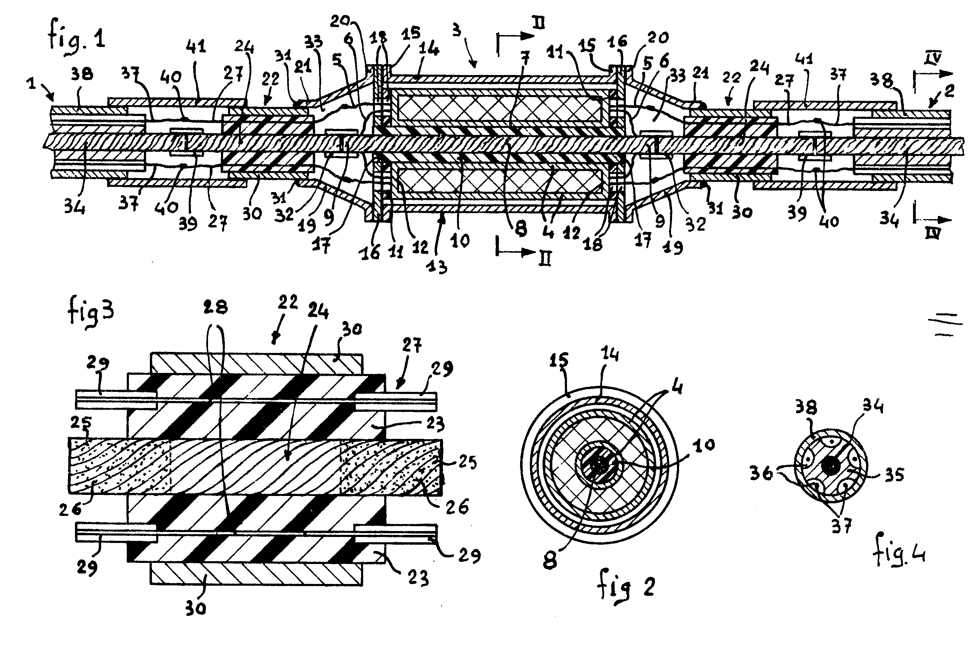

In FIG. 1 - there is illustrated a longitudinal section of a tract in the line, according to the invention, in correspondence of the optoelectronic repeater.

As is seen in FIG. 1, the line comprises two optical-fibres cables 1 and 2 - to be described later on, and an optoelectronic repeater 3 for the signals transmitted.

The optoelectronic repeater 3 - whose transversal section is shown in FIG. 2, comprises a watertight casing 4 inside which there are enclosed the component parts (not shown) of the repeater.

From the watertight casing 4 there sealingly emerge the extremities of the optical-fibres 5 and of the conductors 6 for feeding the optoelectronic component parts. For example the said extremities emerge from the watertight casing 4 - and pass through metallic small-tubes (not shown), welded to the latter, which are filled-up with a polymeric thermosetting material - such as, for example, an epoxy resin.

The electric circuit - connected to the line for feeding the optoelectronic repeaters, will be described further on in the text.

The watertight casing 4, presents a through-cavity 7 in correspondence of its own longitudinal axis. Inside the through-cavity 7 there is housed a length of compact anti-torsional rope 8 whose ends are cantilevered from casing 4.

The length of rope 8 - that, in this text, is also called the 'first rope-length' has its spaces between the component wires or threads, filled-up with an incompressible fluid and it incorporates an electric conductor (not shown). For example, the conductor - is at least a copper wire wound on the length of rope 8. Moreover, the wires or threads forming the first rope-length are made of a material having a high mechanical-resistance to tractions - such as, for example: steel, aromatic polyamids, carbon fibres, and such like.

A layer of electrically insulating plastic layer 10 - for example: a polyolefin layer, covers the outer surface of the cord 8 - except for the extremities 9.

Moreover, a washer 11 - also made from a similar insulating material, is applied to the bases 12 - of the watertight casing 4.

All the elements described above - with reference to the FIGS. 1 and 2, are enclosed in a sealed metallic-box 13.

The metallic-box 13 comprises a tubular metallic body 14 - provided, at its extremities, with flanges 15 that surrounds the watertight casing 4, and metallic discs 16 that adhere to the insulating material washers 11.

For permitting this, the metallic discs 16 are provided with a central hole 17 - that allows for them to be fitted, through force, upon the plastic layer 10 which clads the length of rope 8.

Moreover, the discs 16 and the washers 11 are provided with apertures 18 - for allowing the passage of the extremities of the optical-fibres 5 and of the electric conductors 6, that sealingly emerge from the watertight casing 4.

Moreover, the metallic box 13 comprises two lids 19 having a frusto-conical form, open at both its bases; said lids being provided with flanges 20 and 21 respectively, in correspondence of their greater and lesser frusto-conical bases.

The flanges 20 of the lids - are sealingly fixed to the flanges 15 of the tubular body 14, and the outer edge of discs 16, is interposed between and is connected to the said flanges.

The weight - of said metallic-box 13, of the lids 19, of the watertight casing 4, and of the component parts of the optoelectronic repeaters, all lies entirely upon the first rope-length 8 - thanks to the forced coupling between disc 19 and the plastic layer 10. Therefore, the assembly - of the rope-length 8 with the plastic layer 10 and the discs 16 - constitutes a particular mechanically-resistent element made solid with the box 13.

The apertures - present on the lesser bases of the lids 19 and which are also the apertures of the metallic-box 13, are sealingly closed by cylindrical bodies 22 - that are shown in FIG. 3 - both, in large-scale and in a longitudinal cross-section, for showing their structure better.

Each cylindrical body 22 comprises a cyindrical mass 23 - made from a thermosetting polymeric material - for example: a epoxy resin; or else, a cross-linked polymer, for example: a cross-linked elastomeric polymer.

In correspondence of the radially innermost zone of the cylindrical mass 23, there is englobed a compact, antitorsional length of rope 24 - that, in this text, will also be called the 'second rope-length', whose extremities 25 are cantilevered from the polymeric material. An electric conductor (not shown), is incorporated in the length of rope 24. For example, the conductor is at least a copper wire, wound on said rope-length.

Moreover, the wires or threads - that form the second rope-length, are made of a material having a high mechanical-resistence to tractions - such as, steel, aromatic polyamids, carbon fibres, and such like.

At least for the entire length 25, of the rope-lengths 24 that is cantilevered from the polymeric material - and preferably for a length involving even a part found embedded in the polymeric material, the spaces in-between the forming wires or threads of the second rope-length 24, are preferably filled-up with a metallic material 26 - for example: tin, or metal alloys - such as, for example, solder alloys. In general, the metallic material in question has a temperature at melting point, that does not exceed 1000°C.

For all the remaining part of the second rope-length 24, the spaces between the wires are filled-up with an incompressible fluid.

Moreover, in the cylindrical plastic mass 23, there are englobed a plurality of tracts of optical-fibres 27 - disposed parallelly to the axis of the cylindrical body 22, and with their extremities emerging from the polymeric mass.

Each optical-fibre 27 has its central portion 28 fixed – either with, or without adhesives of the known type, to the polymeric material. Preferably, the said central portion 28 is devoid of any whatsoever plastic protective covering.

The extremities 29 of the optical-fibres, are provided with an adherent type of protection.

The radially outermost surface of the cylindrical plastic mass 23, is covered by a metallic sheath 30.

Moreover, the metallic sheath 30 is fixed through adhesive means, of any whatseover per se known type, to the polymeric material.

As previously stated – and as can be seen in FIG. 1, the cylindrical bodies 22 sealingly shut the apertures of the box 13.

In fact, the flanges 21 – of the frusto-conical lids 19, of the box 13, embrace the metallic sheath 30 and are sealingly welded to it – at point 31.

Moreover, the extremity 25 – of the second rope-length 24, is disposed, end-to-end, with the extremity 9 – of the first rope-length 8, and fixed by means of a squeezing-clamp 32 – through a welding, or such like.

The clamp 32 carries out the mechanical-connection between the rope-lengths 8 and 24, and the electrical-connection – between the conductors incorporated in them.

Between the cylindrical bodies 22, the frusto-conical lids 19 and the discs 16 – there is formed a chamber 33. Inside this chamber are present both, the connections – between the extremities of the optical-fibres 5 (that emerge from the watertight casing 4), as well as the optical-fibres 27 (of the cylindrical body 22), and also the connections between the ends of the electrical conductors 6 (that emerge from the watertight casing 4) and the conductor incorporated in the second rope-length 24.

Moreover, the chamber 33 is filled with an incompressible fluid - that fills every space existing between watertight casing 4 and metallic-box 13.

The cylindrical bodies 22 are also sealingly connected - as will later be specified, to the extremities of the cables 1 and 2 facing them.

The cables 1 and 2 are of the type where the mechanically-resistent armouring is formed by a compact anti-torsional rope - which occupies the radially innermost position of the cables themselves.

In FIG. 4 there is shown - solely by way of non-limiting example, the cross-section of a particular cable - that is apt for realizing a submarine line - according to the invention.

Consequently, it has to be understood that, also included in the ambit of the present invention, are submarine lines having optical-fibres cables of any whatsoever structure - provided that their mechanically-resistent armouring is formed by a rope occupying the radially innermost position of the cables themselves.

In the particular embodiment illustrated in FIGS. 1 and 4, the cables foresee a compact anti-torsional rope 34 that is formed by wires having a high mechanical-resistence to tractions - such as: steel, aromatic polyamids, carbon fibres, and such like.

The spaces in-between the wires that form the rope 34, are filled with an incompressible fluid.

Moreover, an electric conductor (not shown), formed by at least one wire - made of a material having a high conductibility - such as copper, can be incorporated - for example, by winding it around the rope 34.

The rope 34, is surrounded by a plastic layer that is attached to it, which constitutes the core 35 of the cable. On the outer surface of the core 35, there are present a plurality of helically disposed grooves 36, wherein the optical-fibres 37 are loosely housed.

Moreover, the grooves 36 are completely filled with an incompressible fluid.

A plastic or metallic sheath 38 - encloses the core 35, by closing the grooves.

As was previously stated, the cylindrical bodies 22 are connected to the extremities of the cables 1 and 2 facing them. Said extremities of the cables 1 and 2 are prepared in advance, for rendering the extremities of the optical- fibres 37 and of ropes 34 individually accessible - for the connecting operation.

The extremity of the rope 34 is disposed end-to-end with the extremity 25 of the second rope-lenght 24 - and it is fixed to the latter through a squeezing-clamp 39. Apart from realizing a mechanical continuity, this connection also realizes an electrical connection between the conductors incorporated in the rope 34 and in the second rope-length 24.

Moreover, the optical-fibres 37 of the cable, are connected (at 40) to the lengths of optical-fibres 27, of the cylindrical bodies 22.

Furthermore, a tubular metallic piece 41 has its one extremity superimposed over the sheath 38 of the cables, and sealingly fixed - i.e. through welding - if metallic, or, through adhesives - if plastic. The other extremity of the tubular metallic piece 41 is superimposed over the metallic sheath 30 of the cylindrical body 22, and it is sealingly fixed to it by means of welding. The entire space comprised in-between the tubular metallic piece 41 and the extremities of the cables, is filled-up with an incompressible fluid.

As previously stated, a line - according to the invention, is provided with an electric circuit for feeding the optoelectronic repeaters - of the signals transmitted by the optical-fibres.

A conductor, of the electric circuit, is constituted by the assembly of the conductors incorporated in the ropes 34 of the cables, and in the rope-lengths 8 and 24, disposed in series one with the other, and by the connecting-clamps between the ropes and the rope-lengths in question.

In general, the return-conductor is the sea.

As an alternative, if the cables' sheath is metallic, then the return-conductor can just be the assembly of: the cables' sheath, the metallic sheath of the cylindrical body and the repeater's box - all these elements being covered outwardly, by a protective plastic layer. Otherwise, the return-conductor can be constituted by the said assembly and by the sea, disposed in parallel manner to one another.

Moreover, if the ropes 24 - of the cables, and the rope-lengths 8 and 24, do not have any conductors incorporated, then the conductor of the electric circuit for feeding the optoelectronic repeaters, is formed by the assembly comprised by: the metallic sheath of the cables, the metallic sheath of the cylindrical bodies and the box of the repeater - all covered outwardly, by an insulatic plastic layer; while the return-conductor is the sea.

0206226

12

Moreover, the line in question can foresee the usual anticorrosive protections that are usually adopted in the field of submarine lines.

In the form of embodiment, given previously, of a line according to the invention, there was described a particular mechanically-resistent element made solid with the box 13 - for effectuating the mechanical connection of these latter with the rope-lengths 24 of the cylindrical bodies 22.

Even though the particular mechanically-resistent element described, is the preferred one, this fact has not to be taken in any limiting sense - because other, alternative embodiments, can be foreseen.

According to an alternative embodiment (not shown), the mechanically-resistent element comprises a tubular tang - cantilevered from each of the slabs 16 - in correspondence of the holes 17, in substitution of the rope-lengths 8; these tangs being locked upon the extremities 25 of the rope-lengths 24, of the cylindrical bodies 22.

From the previously-given embodiments and from the following consideration, it can be understood that, with the present invention, the aims that are proposed can be achieved.

In a submarine line for optical-fibres telecommunications - acccording to the invention, the component parts of the optoelectronic repeaters are protected against humidity, by the presence of a double barrier.

In fact, the component parts of the optoelectronic repeaters are enclosed inside a watertight casing that, in its turn, is closed inside a sealed metallic box - with having every space, in-between these elements, filled-up with an incompressible fluid - such as, for example, a silicone grease that, in se, has the property of impeding any migration of humidity.

Moreover, the metallic box is shut in a watertight way - in correspondence of the apertures turned towards the cables, by means of the cylindrical bodies 22 that, owing to the special structure they are endowed with, form an impenetrable barrier against any spreading of humidity. In fact, even if, with the passage of time, cracks in the cable-sheath should form - that were such as to allow water to penetrate and spread along the cable, no water would ever be able to overcome said barrier formed by the cylindrical bodies 22. The motive for this, is the fact that each element forming the cylindrical bodies 22, is watertight in se - or else, has been made watertight, such as, the rope-length - seeing that, at its extremities each space, between the component-wires, is filled-up with a metallic material. Moreover, all the component parts of the cylindrical bodies 22 are reciprocally tightly connected - with consequently, eliminating all the possibile ways for the penetration of water.

For providing the maximum guarantee against the dangers that even a minimum trace of water could cause to the component parts of the optoelectronic repeaters, there is the fact that the complex - consisting of the cylindrical bodies 22, the metallic box for the repeaters, with all the elements housed therein, can already be prepared in the factory itself. Hence, there can also be put into effect all the contrivances that guarantee the absence of humidity in the box.

The complex in question, that possesses the quality of being absolutely watertight, eliminates any whatseover risks of being damaged - as a result of humidity reaching the component parts of the repeaters during the assembling of the line - because, in having been previously prepared in the factory, it does not require any internal interventions carried out to it, during said line-assembling operation.

The assembling of the line, also results as being rapidly carried out - seeing that it simply consists in connecting the complex in question, to the optical-fibres cables.

Although particular embodiments of a submarine line, according to the invention, have been illustrated and described here, what is also understood as being comprised within its ambit, are all the possible alternative variations, derived from the inventive principle, that are accessible to the one skilled in the art.

1

# C L A I M S

1.    Submarine line for optical-fibres telecommunications, that comprises an optoelectronic repeater (3), for the signals transmitted, inserted in-between two submarine optical-fibres cables (1, 2)  each provided with a watertight sheath (38) of the type wherein  the mechanically-resistent armouring is a rope (34)  - that occupies  the radially  innermost position of the cable,  said line being characterized by the fact that the optoelectronic repeater (3)  comprises  a  box (13)  that is substantially tubular,  and cylindrical bodies (22) made of polymeric material, and provided,  on their exterior with a metallic sheath (30)  that sealingly shuts the apertures in the box (13) bases, the said cylindrical bodies (22)  englobing tracts of optical-fibres (28) for connecting with those (37) - of the cables  and with those (5) - of the repeaters,  and a first rope-length (24),  having one extremity fixed  to the cable rope (34)  and the other  extremity fixed  to  a mechanically-resistent element (9)  made solid with the box (13)  this latter enclosing a watertight casing (4) containing the component parts of the optoelectronic repeater, the metallic sheaths (30) of said cylindrical bodies (22)  being moreover, connected in a watertight way,  to the cable sheaths (38).

2.    Submarine line,  according to CLAIM 1,  characterized by the fact that the first rope-length (24), englobed in the polymeric cylindrical body (22),  has its extremities cantilevered from the latter,  with the spaces between the component wires,  at least in correspondence of the  cantilevered extremities,  being filled-up  with metallic material (26), while - in the remaining portion  of the  rope-length,  the spaces,  in-between the wires, are filled-up  with an incompressible fluid.

3.    Submarine line,  according to CLAIM 2,  characterized by the fact  that the metallic material (26) - that fills-up the spaces  in-between the wires,  is selected from  amongst metals and metal alloys which have a temperature at melting point, that does not exceed 1000°C.

4.     Submarine line, according to CLAIM 1, characterized by the fact that the lengths (28) of optical fibres englobed in the polymeric material of the cylindrical body (22), have their extremities cantilevered from this latter, the said optical-fibres lengths being connected to the polymeric material, with having the central length devoid of a protective plastic covering, and the cantilevered lengths (29) covered with a protection of the adherent type.

5.     Submarine line, according to CLAIM 1, characterized by the fact that the metallic sheath (30) that outwardly covers the cylindrical bodies (22), is fixed sealingly to the polymeric material forming the cylindrical bodies (22).

6.     Submarine line, according to CLAIM 1, characterized by the fact that the mechanically-resistent element, made solid with the box, comprises a second rope-length (8), housed inside a through-cavity of the watertight casing (4) enclosed inside the box (13) and containing the component parts of the optoelectronic repeater, the said second rope-length (8) having its extremities cantilevered from said casing and being covered by a layer (10) of electrically insulating material at least in the zone surrounded by the walls of said through-cavity of the watertight casing (4).

7.     Submarine line, according to CLAIM 1, characterized by the fact that the watertight connection - between the cylindrical bodies (22) covered by a metallic watertigh sheath (30) and the cable sheath (38), comprises a tubular metallic body (41) whose extremities embrace and are connected sealingly, to the extremities of the cable sheath (38) and to the extremities of the metallic sheath (30) - of the cylindrical bodies (22), with having every space - comprised in-between tubular body (41), cables (1,2) and cylindrical bodies (22), filled-up with an incompressible fluid.

0206226

P. 539

fig. 1

fig 2

fig3

fig. 4

1/1